# FASCICULE DE BREVET EUROPEEN

(11) **EP 0 555 123 B1**
(45) Date de publication et mention de la délivrance du brevet: **14.06.1995**
(21) Numéro de dépôt: 93400176.9
(22) Date de dépôt: 26.01.1993
(51) Int. Cl.: B64C 25/26, E05C 3/24

(54) **Dispositif d'accrochage assurant le verrouillage, en position train haut, d'un train d'atterrissage d'avion**
Einhakenvorrichtung, mit Befestigung der Fahrwerkeinfahrverriegelung eines Flugzeuges
Hooking device ensuring the landing gear uplocking in an aircraft

(30) Priorité: 03.02.1992 FR 9201160
(43) Date de publication de la demande: 11.08.1993
(73) Titulaire: MESSIER BUGATTI, F-78140 Velizy Villacoublay (FR)
(72) Inventeur: Derrien, Michel, F-78000 Versailles (FR)
(74) Mandataire: Jaunez, Xavier

(56) Documents cités:
- FR-A- 1 523 401
- GB-A- 2 161 202

## Description

L'invention concerne les dispositifs d'accrochage, également dénommés boîtiers d'accrochage, destinés à assurer le verrouillage, en position train haut, d'un train d'atterrissage d'avion.

On connaît déjà des dispositifs d'accrochage comportant un carter principal recevant un crochet articulé autour d'un premier axe, et un levier de verrouillage articulé autour d'un deuxième axe parallèle à ce premier axe, dont une branche porte un galet d'appui coopérant avec une surface de came du crochet, tandis que l'autre branche est reliée, par l'intermédiaire d'un embiellage, à l'arbre de sortie d'un ensemble moto-réducteur d'entraînement.

Des dispositifs d'accrochage présentant la structure précitée ne sont cependant utilisés qu'en secours, c'est-à-dire qu'ils sont prévus pour intervenir seulement en cas de panne hydraulique du système de déverrouillage normal.

Dans le cadre de la recherche d'une génération centralisée électrique, plutôt qu'hydraulique, il apparaît intéressant d'utiliser un dispositif du type précité comme système de déverrouillage normal.

Toutefois, les spécialistes ont plutôt tendance à écarter une telle utilisation en raison des risques qu'elle comporterait. On ne peut en effet écarter les risques de défaut mécanique au niveau du réducteur (rupture de dents, grippage au niveau des dentures et/ou des roulements), risques dont les conséquences sont extrêmement graves puisque le blocage du crochet articulé interdit la descente du train d'atterrissage concerné.

Bien que la probabilité d'un tel défaut soit faible, la gravité des conséquences amène les spécialistes à réfléchir sur des mécanismes de secours capables d'intervenir en cas de panne locale ou générale. Il est intéressant de rappeler qu'on vise à limiter le taux de panne à une valeur de l'ordre de 10⁻⁹ par heure de fonctionnemnet dans le domaine aéronautique.

L'homme de l'art pourrait imaginer équiper le réducteur d'un système différentiel, ou encore utiliser deux réducteurs séparés, mais ces solutions n'apparaissent pas totalement satisfaisantes au niveau de la sécurité, et ont en outre un effet défavorable sur le plan de la masse et de l'encombrement.

C'est précisément ce problème que l'invention se propose de résoudre, en concevant un dispositif d'accrochage équipé d'un mécanisme de sécurité capable d'assurer la fonction de déverrouillage du crochet articulé en cas de point dur au niveau du réducteur ou de panne des moteurs électriques, et même en cas de panne générale (perte de la génération d'alimentation sur l'avion).

L'invention a ainsi pour objet de réaliser un dispositif d'accrochage dont la structure permette de faire face à une situation d'ultime secours, et autorise quand même le déverrouillage du train d'atterrissage en cas de point dur persistant au niveau de ses organes d'entraînement ou de panne locale ou générale.

L'invention a aussi pour objet de réaliser un dispositif d'accrochage dont la structure soit à la fois légère et compacte, et dont le déclenchement en ultime secours ne nécessite qu'une très faible énergie.

Il s'agit plus particulièrement d'un dispositif d'accrochage assurant le verrouillage, en position train haut, d'un train d'atterrissage d'avion, comportant un carter principal recevant un crochet articulé autour d'un premier axe, et un levier de verrouillage articulé autour d'un deuxième axe parallèle audit premier axe, dont une première branche porte un galet d'appui coopérant avec une surface de came du crochet, et dont une deuxième branche est reliée, par l'intermédiaire d'un embiellage, à l'arbre de sortie d'un ensemble moto-réducteur d'entraînement, caractérisé par le fait que l'embiellage présente une lumière oblongue au niveau de l'un de ses axes d'articulation de façon à autoriser un pivotement, dans le sens du déverrouillage du crochet articulé, du levier de verrouillage en cas de blocage de l'arbre de sortie de l'ensemble moto-réducteur, et en ce que ledit dispositif d'accrochage comporte en outre un actionneur indépendant associé au levier de verrouillage, dont le déclenchement en secours provoque un pivotement dudit levier de verrouillage suffisant pour dégager le galet d'appui de la surface de came associée et déverrouiller le crochet articulé.

Avantageusement, l'embiellage comporte un levier de commande solidaire en rotation de l'arbre de sortie de l'ensemble moto-réducteur, et une bielle de liaison qui est articulée sur ce levier de commande et sur le levier de verrouillage, ladite bielle présentant une lumière oblongue au niveau de l'une de ses deux articulations ; un moyen de rappel élastique est en outre prévu, tendant à faire pivoter ledit levier de verrouillage dans le sens du verrouillage du crochet articulé. Conformément à un mode d'exécution particulier, la bielle présente une lumière oblongue au niveau de son articulation avec le levier de verrouillage, et le moyen de rappel élastique est constitué par au moins un ressort de traction reliant ledit levier de verrouillage au carter principal.

De préférence encore, l'actionneur indépendant est essentiellement constitué par un ensemble à piston et cylindre coopérant avec le levier de verrouillage par la tige dudit piston.

Avantageusement alors, l'actionneur indépendant coopère avec la deuxième branche du levier de verrouillage par appui de l'extrémité libre de la tige du piston sur un galet porté par ladite branche, le déclenchement dudit actionneur provoquant la sortie de ladite tige et par suite le pivotement dudit levier de verrouillage. En particulier, le piston comporte une butée arrière souple, et est soumis à l'action d'un ressort tendant à maintenir la tige en position rentrée.

De préférence, l'actionneur indépendant est déclenché par une cartouche de gaz : il pourra s'agir par exemple d'une cartouche contenant une poudre qui libère le gaz propulseur lorsqu'elle est enflammée par un moyen pyrotechnique, ou encore d'une cartouche constituant une réserve de gaz dont le gaz propulseur est libéré par une vanne ou un robinet associé.

Avantageusement enfin, le crochet articulé est soumis à l'action d'au moins un ressort de rappel tendant à le faire tourner dans le sens du déverrouillage, avec maintien de l'appui contre le galet associé porté par le levier de verrouillage.

D'autres caractéristiques et avantages de l'invention apparaîtront plus clairement à la lumière de la description qui va suivre et du dessin annexé, concernant un mode de réalisation particulier, en référence aux figures où :
- la figure 1 est une vue en coupe d'un dispositif d'accrochage conforme à l'invention, dont les organes mobiles sont ici représentés en position de verrouillage ;
- la figure 2 est une vue latérale du dispositif précédent, permettant de distinguer l'ensemble moto-réducteur associé.

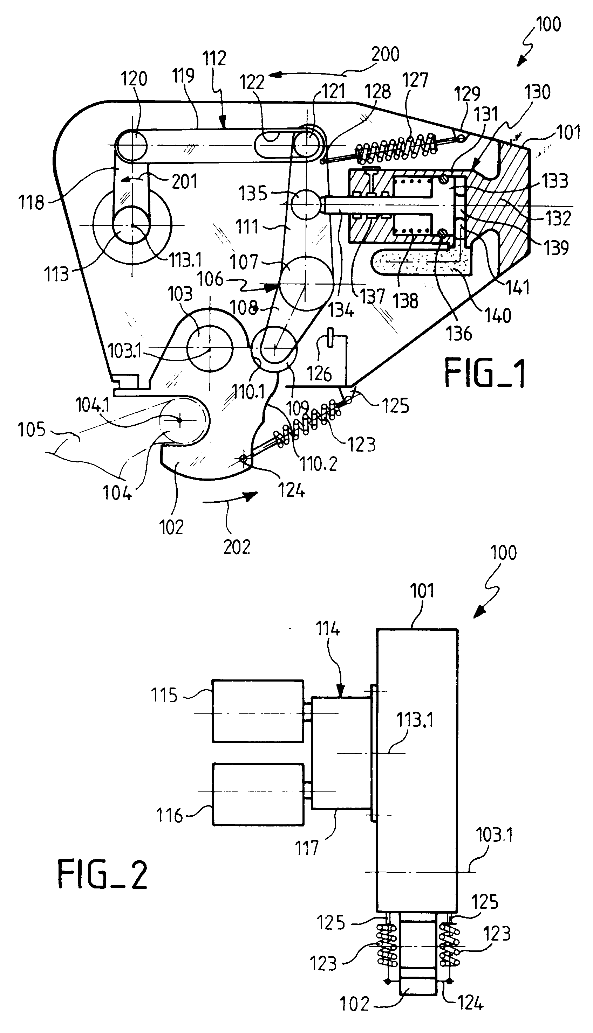

Les figures 1 et 2 illustrent un dispositif d'accrochage ou boîtier d'accrochage 100 conforme à l'invention, destiné à assurer le verrouillage, en position train haut, d'un train d'atterrissage d'avion. Le boîtier d'accrochage 100 comporte un carter principal 101 recevant inférieurement un crochet articulé 102 monté tournant autour d'un axe 103. En position train haut, qui correspond à celle illustrée ici, le crochet 102 assure le verrouillage du train par l'intermédiaire d'un galet 104 monté en extrémité d'un appendice 105 solidaire de la jambe de train. Il convient de noter que dans cette position, l'axe 104.1 du galet 104 est déporté par rapport à l'axe 103.1 d'articulation du crochet 102, de sorte que la charge exercé par le train produit un couple tendant à faire tourner le crochet dans le sens de son ouverture. Le boîtier d'accrochage 100 comporte en outre, toujours logé dans le carter principal 101, un levier de verrouillage 106 articulé autour d'un deuxième axe 107 parallèle à l'axe du crochet articulé, dont une première branche 108 porte un galet d'appui 109 coopérant avec une surface de came du crochet 102, et dont une deuxième branche 111 est reliée, par l'intermédiaire d'un embiellage 112, à l'arbre de sortie 113 d'un ensemble moto-réducteur d'entraînement 114 (mieux visible sur la figure 2).

Le crochet articulé 102 présente une surface de came constituée par deux portions 110.1 et 110.2, dont la portion 110.1 présente un rayon de courbure identique au rayon du galet d'appui 109 pour un verrouillage du crochet articulé dans la position illustrée ici. Lorsque le levier de verrouillage 106 est pivoté dans le sens du dégagement de son galet d'appui 109 (sens repéré par la flèche 200), la charge exercée sur le crochet articulé 102 par le galet 104 de la jambe de train provoque la rotation du crochet, et le déverrouillage du train, le galet d'appui 109 étant alors en appui sur l'autre portion de came 110.2.

La figure 2 permet de distinguer l'ensemble moto-réducteur d'entraînement 114 associé au dispositif d'accrochage 100, ledit ensemble comportant deux moteurs électriques 115, 116, dont la sortie est reliée à un réducteur commun 117. L'arbre de sortie de ce réducteur commun est schématisé par son axe 113.1.

Lorsque les moteurs 115, 116 sont actionnés, l'arbre de sortie 113 tourne dans le sens de la flèche 201 pour faire pivoter le levier de verrouillage 106 dans le sens du dégagement de son galet d'appui 109 d'avec la surface de came associée 110.1 du crochet articulé 102. Un tel principe général est jusque là conforme aux conceptions traditionnelles.

Conformément à un aspect essentiel de l'invention, l'embiellage 112 présente une lumière oblongue au niveau de l'un de ses axes d'articulation, de façon à autoriser un pivotement, dans le sens du déverrouillage du crochet articulé 102, du levier de verrouillage 106 en cas de blocage de l'arbre de sortie 113 de l'ensemble moto-réducteur 114, et le dispositif d'accrochage 100 comporte en outre un actionneur indépendant 130 associé au levier de verrouillage 106, dont le déclenchement en secours provoque un pivotement dudit levier de verrouillage suffisant pour dégager le galet d'appui 109 de la surface de came associée 110.1 et déverrouiller le crochet articulé 102.

Ainsi, en cas de point dur ou de panne locale ou généralisée, l'actionneur indépendant 130 peut agir directement sur le levier de verrouillage 106 afin d'assurer le pivotement de celui-ci, ce pivotement étant rendu possible grâce à la lumière oblongue prévue dans l'embiellage 112.

En l'espèce, l'embiellage 112 comporte un levier de commande 118 solidaire en rotation de l'arbre de sortie 113 de l'ensemble moto-réducteur 114, et une bielle de liaison 119 qui est articulée sur ce levier de commande 118 (par une articulation 120) et sur le levier de verrouillage 106 (par une articulation 121). La bielle de liaison 119 présente ici une lumière oblongue 122 au niveau de son articulation avec le levier de verrouillage 106, l'axe d'articulation 121 pouvant ainsi librement coulisser, sur une course prédéterminée, dans cette lumière oblongue. Il va de soi que l'on aurait pu en variante prévoir la lumière oblongue précitée au niveau de l'autre extrémité de la bielle de liaison 119, ou encore au niveau de l'extrémité du levier de commande 118, ce dernier mode de réalisation étant toutefois plus encombrant que celui qui est illustré ici. Il est intéressant de noter qu'en position de verrouillage, la direction de la lumière oblongue 122, qui est confondue avec celle de la bielle de liaison 119, est sensiblement perpendiculaire à la direction générale de la branche concernée 111 du levier de verrouillage 106, de sorte que le pivotement en secours de ce levier de verrouillage implique un minimum de frottement au niveau de la lumière oblongue 122. L'articulation 121 se trouve, dans la position normale de verrouillage, en extrémité de la lumière oblongue 122, de sorte qu'il n'y a aucun mou dans la transmission lorsque l'ensemble moto-réducteur d'entraînement fonctionne normalement pour déverrouiller le crochet articulé. La longueur de la lumière oblongue 122 sera naturellement prévue de telle façon que le pivotement du levier de verrouillage 106 soit suffisant pour dégager le galet d'appui 109 de la surface de came concernée 110.1. On pourra d'ailleurs prévoir une butée 126 solidaire du carter principal 101 afin d'éviter un appui, en position secours, qui exercerait un effort direct sur le levier de commande et par suite sur l'arbre de sortie bloqué du réducteur.

Il convient en outre de prévoir alors un moyen de rappel élastique associé au levier de verrouillage 106, pour tendre à faire pivoter ce levier dans le sens du verrouillage du crochet articulé 102, de façon à éviter tout risque de dégagement intempestif du galet 109 d'avec la portion de came 110.1 (il convient de noter que les efforts concernés sont essentiellement repris au niveau de l'axe 107 du levier de verrouillage, de sorte que le couple de rappel nécessaire est dans la pratique relativement faible) : le moyen de rappel élastique est ici assuré par au moins un (par exemple deux) ressort de traction 127 reliant le levier de verrouillage 126 (par un point d'accrochage 128 voisin de l'articulation 121 pour obtenir un couple de rappel maximal) au carter principal 101 (grâce à une patte de liaison associée 129). Par ailleurs, le crochet articulé 102 est lui-même soumis à l'action d'au moins un ressort de rappel tendant à le faire tourner dans le sens du déverrouillage : on a ici prévu deux ressorts de traction 123 reliés au crochet articulé 102 par une tige commune 124, et montés sur le carter principal 101 par des pattes associées 125 : ces ressorts de rappel 123 tendent à faire tourner le crochet articulé 102 dans le sens du déverrouillage (repéré par le flèche 202), ces ressorts intervenant ainsi lors du basculement du levier de verrouillage pour le dégagement du galet d'appui 109, et assurant en outre un bon contact entre ledit galet et l'autre portion de came 110.2.

L'actionneur indépendant 130 est ici réalisé sous la forme d'un petit vérin comportant un cylindre 131 solidaire d' une entretoise 132 du carter principal 101, dans lequel coulisse un piston 133 dont la tige 134 peut coopérer directement avec le levier de verrouillage 106.

L'actionneur indépendant 130 peut être disposé de façon à coopérer avec l'une ou l'autre des deux branches du levier de verrouillage 106, et, dans chacun de ces cas, d'un côté ou de l'autre de la branche concernée, la tige du piston agissant alors sur le levier de verrouillage lors de la rentrée ou de la sortie de ladite tige.

Parmi ces quatre configurations possibles, celle qui est illustrée ici apparaît la plus avantageuse : en effet, une coopération avec la branche 111 du levier de verrouillage permet d'obtenir un ensemble extrêmement compact et, de plus, la disposition en tige-poussoir apparaît préférable dans la mesure où les questions d'étanchéité sont plus faciles à résoudre, l'étanchéité au niveau de la chambre annulaire du petit vérin étant plus délicate à assurer. Ainsi, l'actionneur indépendant 130 coopère avec la deuxième branche 111 du levier de verrouillage par appui de l'extrémité libre de la tige 134 du piston 133 sur un galet 135 porté par ladite branche, le déclenchement dudit actionneur provoquant la sortie de ladite tige, et par suite le pivotement du levier de verrouillage dans le sens de la flèche 200. Lors du fonctionnement normal, le piston 133 est maintenu en position tige rentrée par un ressort de compression associé 138 logé dans le cylindre 131, une butée arrière souple 139 évitant un contact dur entre le galet 135 et l'extrémité libre de la tige 134 dans la position de verrouillage du levier 106. On distingue également une gorge 137 associée à une réserve d'huile visant à ménager les joints d'étanchéité associés à la tige de piston 134, conformément à des modalités bien connues. L'étanchéité de la chambre arrière 141 du petit vérin est en outre assurée par un joint glissant 136 monté sur le piston 133.

Ainsi que cela est illustré sur la figure 1, l'actionneur indépendant 130 est déclenché par une cartouche de gaz 140, qui est montée sur le cylindre 131 de façon à communiquer directement avec la chambre arrière 141. Il pourra s'agir d'une cartouche contenant une poudre qui libère le gaz propulseur lorsqu'elle est enflammée par un moyen pyrotechnique, ou encore d'une cartouche constituant une réserve de gaz dont le gaz propulseur est libéré par une vanne ou un robinet associé.

Le mode de réalisation illustré ici pour l'actionneur indépendant, réalisé sous la forme d'un petit vérin pyrotechnique, est compatible avec une structure à la fois légère et compacte.

Le déclenchement de l'actionneur indépendant 130 ne requiert alors qu'une très faible énergie : avec un déclenchement de type pyrotechnique, qui peut être commandé par le pilote depuis la cabine de pilotage, dès qu'un point dur apparait au niveau de la commande associée, ou en cas de panne dans la génération de l'avion. Le déclenchement de l'actionneur indépendant 130 agit instantanément, par l'intermédiaire du galet 135, sur le levier de verrouillage 106, et provoque un pivotement dudit levier suffisant pour dégager le galet d'appui 109 de la surface de came associée 110.1 et déverrouiller le crochet articulé 102, ledit crochet étant alors parfaitement rétracté grâce à la fois aux ressorts de rappel 123 et à la charge exercée au niveau du galet 104 de la jambe de train.

Le système de sécurité qui équipe le dispositif d'accrochage selon l'invention permet ainsi de faire face à une situation de point dur ou de panne locale ou généralisée, et de déverrouiller normalement le train d'atterrissage de l'avion, en autorisant une descente du train en ultime secours pour l'atterrissage. Il va de soi que le dispositif ne peut resservir tel quel par la suite, et doit subir des opérations de réarmement, avec un changement de la cartouche de gaz ou de poudre 140, mais ces opérations peuvent être aisément effectuées en atelier grâce à l'accessibilité des composants du dispositif d'accrochage.

L'invention n'est pas limitée au mode de réalisation qui vient d'être décrit, mais englobe au contraire toute variante reprenant les caractéristiques essentielles énoncées dans la revendication 1.

## Revendications

1. Dispositif d'accrochage (100) assurant le verrouillage, en position train haut, d'un train d'atterrissage d'avion, comportant un carter principal (101) recevant un crochet articulé (102) autour d'un premier axe (103), et un levier de verrouillage (106) articulé autour d'un deuxième axe (107) parallèle audit premier axe (103), dont une première branche (108) porte un galet d'appui (109) coopérant avec une surface (110.1, 110.2) de came du crochet (102), et dont une deuxième branche (111) est reliée, par l'intermédiaire d'un embiellage (112), à l'arbre de sortie (113) d'un ensemble moto-réducteur d'entraînement (114), caractérisé par le fait que l'embiellage (112) présente une lumière oblongue (122) au niveau de l'un (121) de ses axes d'articulation de façon à autoriser un pivotement, dans le sens du déverrouillage du crochet articulé (102), du levier de verrouillage (106) en cas de blocage de l'arbre de sortie (113) de l'ensemble moto-réducteur (114), et en ce que ledit dispositif d'accrochage comporte en outre un actionneur indépendant (130) associé au levier de verrouillage (106), dont le déclenchement en secours provoque un pivotement dudit levier de verrouillage suffisant pour dégager le galet d'appui (109) de la surface de came associée (110.1) et déverrouiller le crochet articulé (102).

2. Dispositif d'accrochage selon la revendication 1, caractérisé par le fait que l'embiellage (112) comporte un levier de commande (118) solidaire en rotation de l'arbre de sortie (113) de l'ensemble moto-réducteur, et une bielle de liaison (119) qui est articulée sur ce levier de commande (118) et sur le levier de verrouillage (106), ladite bielle (119) présentant la lumière oblongue (122) au niveau de l'une (121) de ses deux articulations, et par le fait qu'un moyen de rappel élastique (127) est prévu, tendant à faire pivoter ledit levier de verrouillage dans le sens du verrouillage du crochet articulé (102).

3. Dispositif d'accrochage selon la revendication 2, caractérisé par le fait que la bielle (119) présente la lumière oblongue (122) au niveau de son articulation (121) avec le levier de verrouillage (106), et que le moyen de rappel élastique est constitué par au moins un ressort de traction (127) reliant ledit levier de verrouillage au carter principal (101).

4. Dispositif d'accrochage selon l'une des revendications 1 à 3, caractérisé par le fait que l'actionneur indépendant (130) est essentiellement constitué par un ensemble à piston (133) et cylindre (131) coopérant avec le levier de verrouillage (106) par la tige (134) dudit piston.

5. Dispositif d'accrochage selon la revendication 4, caractérisé par le fait que l'actionneur indépendant (130) coopère avec la deuxième branche (111) du levier de verrouillage (106) par appui de l'extrémité libre de la tige (134) du piston (133) sur un galet (135) porté par ladite branche, le déclenchement dudit actionneur provoquant la sortie de ladite tige et par suite le pivotement dudit levier de verrouillage.

6. Dispositif d'accrochage selon la revendication 5, caractérisé par le fait que le piston (133) comporte une butée arrière souple (139), et est soumis à l'action d'un ressort (138) tendant à maintenir la tige (131) en position rentrée.

7. Dispositif d'accrochage selon l'une des revendications 4 à 6, caractérisé par le fait que l'actionneur indépendant (130) est déclenché par une cartouche de gaz (140).

8. Dispositif d'accrochage selon la revendication 7, caractérisé par le fait que la cartouche (140) contient une poudre qui libère le gaz propulseur lorsqu'elle est enflammée par un moyen pyrotechnique.

9. Dispositif d'accrochage selon la revendication 7, caractérisé par le fait que la cartouche (140) est une réserve de gaz dont le gaz propulseur est libéré par une vanne ou un robinet associé.

10. Dispositif d'accrochage selon l'une des revendications 1 à 9, caractérisé par le fait que le crochet articulé (102) est soumis à l'action d'au moins un ressort de rappel (123) tendant à le faire tourner dans le sens du déverrouillage, avec maintien de l'appui contre le galet associé (109) porté par le levier de verrouillage (106).

## Claims

1. A catch device (100) for locking an aircraft landing gear in the high position, the device comprising a main casing (101) receiving a hook (102) hinged about a first axis (103) and a locking lever (106) hinged about a second (107) axis parallel to said first axis (103), a first branch (108) of the lever carrying a thrust wheel (109) that co-operates with a camming surface (110.1, 110.2) of the hook (102), and a second branch (111) of the lever being connected via a linkage (112) to the outlet shaft (113) of a driving motor and gear box assembly (114), the device being characterized by the fact that the linkage (112) includes an oblong slot (122) at one of its hinged axes (121) in order to make it possible for the locking lever (106) to pivot in the direction for unlocking the hinged hook (102) in the event of the outlet shaft (113) of the motor and gear box assembly (114) jamming, and in that said catch device further includes an independent trigger (130) associated with the locking lever (106), suitable for being triggered in an emergency to pivot said locking lever sufficiently to release the thrust wheel (109) from the associated camming surface (110.1) and to unlock the hinged hook (102).

2. A catch device according to claim 1, characterized by the fact that the linkage (112) includes a crank (118) constrained to rotate with the outlet shaft (113) of the motor and gear box assembly, and a connecting rod (119) which is hinged to said crank (118) and to the locking lever (106), said connecting rod (119) having the first oblong slot (122) level with one of its two hinges (121), and by the fact that resilient return means (127) are provided urging said locking lever in the direction for locking the hinged hook (102).

3. A catch device according to claim 2, characterized by the fact that the connecting rod (119) has the oblong slot (122) level with its hinge (121) with the locking lever (106), and that the resilient return means is constituted by at least one traction spring (127) connecting said locking lever to the main casing (101).

4. A catch device according to any one of claims 1 to 3, characterized by the fact that the independent trigger (130) is essentially constituted by a piston (133) and cylinder (131) assembly co-operating with the locking lever (106) via the rod (134) of said piston.

5. A catch device according to claim 4, characterized by the fact that the independent trigger (130) co-operates with the second branch (111) of the locking lever (106) by the free end of the piston rod (134) pressing against a wheel (135) carried by said branch, the triggering of said trigger causing said rod to be extended and consequently causing said locking lever to pivot.

6. A catch device according to claim 5, characterized by the fact that the piston (133) includes a flexible rear abutment (139), and is subjected to the action of a spring (138) tending to hold the rod (131) in the retracted position.

7. A catch device according to any one of claims 4 to 6, characterized by the fact that the independent trigger (130) is triggered by a gas cartridge (140).

8. A catch device according to claim 7, characterized by the fact that the cartridge (140) contains a powder which releases the propellant gas when ignited by explosive means.

9. A catch device according to claim 7, characterized by the fact that the cartridge (140) constitutes a supply of gas from which the propellant gas is released via an associated valve or cock.

10. A catch device according to any one of claims 1 to 9, characterized by the fact that the hinged hook (102) is subjected to the action of at least one return spring (123) tending to rotate it in the unlocking direction, with the hook being kept pressed against the associated wheel (109) carried by the locking lever (106).

## Patentansprüche

1. Einhakvorrichtung (100), welche die Verriegelung eines Flugzeugfahrwerkes in seiner angehobenen Position gewährleistet, umfassend ein Hauptgehäuse (101), das einen um eine erste Achse (103) schwenkbaren Haken (102) aufnimmt, und einen um eine zur ersten Achse (103) parallele zweite Achse (107) schwenkbaren Verriegelungshebel (106), von dem ein erster Arm (108) eine Stützrolle (109) trägt, die mit einer Nockenfläche (110.1, 110.2) des Hakens (102) zusammenwirkt, und von dem ein zweiter Arm (111) über eine Lenkeranordnung (112) mit einer Ausgangswelle (113) einer Antriebs-Getriebemotoranordnung (114) verbunden ist, dadurch **gekennzeichnet**, daß die Lenkeranordnung (112) ein Langloch (122) im Bereich ihrer einen Gelenkachse (121) hat, um eine Schwenkbewegung des Verriegelungshebels (106) im Sinne einer Entriegelung des schwenkbaren Hakens (102) für den Fall einer Blockierung der Ausgangswelle (113) der Getriebemotoranordnung (114) zu ermöglichen, und daß die Einhakvorrichtung ferner eine mit dem Verriegelungshebel (106) verbundene unabhängige Betätigungseinrichtung (130) umfaßt, deren Auslösung im Notfall ein Verschwenken des Verriegelungshebels bewirkt, das ausreicht, um die Stützrolle (109) von der zugeordneten Nockenfläche (110.1) abzuheben und den schwenkbaren Haken (102) zu entriegeln.

2. Einhakvorrichtung nach Anspruch 1, dadurch **gekennzeichnet**, daß die Lenkeranordnung (112) einen mit der Ausgangswelle (113) der Getriebemotoranordnung drehfest verbundenen Steuerhebel (118) und einen Verbindungslenker (119) umfaßt, der an dem Steuerhebel (118) und an dem Verriegelungshebel (106) angelenkt ist, wobei der Lenker (119) das Langloch (122) im Bereich einer seiner beiden Gelenke (121) hat, und daß eine elastische Rückstellvorrichtung (127) vorgesehen ist, welche versucht, den Verriegelungshebel in Richtung auf eine Verriegelung des schwenkbaren Hakens (102) zu verschwenken.

3. Einhakvorrichtung nach Anspruch 2, dadurch **gekennzeichnet**, daß der Lenker (119) das Langloch (122) im Bereich seiner Gelenkverbindung (121) mit dem Verriegelungshebel (106) hat und daß die elastische Rückstellvorrichtung von mindestens einer Zugfeder (127) gebildet ist, welche den Verriegelungshebel mit dem Hauptgehäuse (101) verbindet.

4. Einhakvorrichtung nach einem der Ansprüche 1 bis 3, dadurch **gekennzeichnet**, daß die unabhängige Betätigungsvorrichtung (130) im wesentlichen von einer Kolben (133) - Zylinder (131) - Anordnung gebildet ist, welche mit dem Verriegelungshebel (106) über die Kolbenstange (134) des Kolbens zusammenwirkt.

5. Einhakvorrichtung nach Anspruch 4, dadurch **gekennzeichnet**, daß die unabhängige Betätigungsvorrichtung (130) mit dem zweiten Arm (111) des Verriegelungshebels (106) über die Anlage des freien Endes der Kolbenstange (134) des Kolbens (133) an einer Rolle (135) zusammenwirken, die von dem Arm gelagert ist, wobei das Auslösen der Betätigungsvorrichtung das Ausfahren der Kolbenstange und infolgedessen eine Schwenkbewegung des Verriegelungshebels bewirkt.

6. Einhakvorrichtung nach Anspruch 5, dadurch **gekennzeichnet**, daß der Kolben (133) einen rückwärtigen nachgiebigen Anschlag (139) trägt und der Wirkung einer Feder (138) ausgesetzt ist, welche versucht, die Kolbenstange (131) in ihrer eingefahrenen Position zu halten.

7. Einhakvorrichtung nach einem der Ansprüche 4 bis 6, dadurch **gekennzeichnet**, daß die unabhängige Betätigungsvorrichtung (130) durch eine Gaspatrone (140) ausgelöst wird.

8. Einhakvorrichtung nach Anspruch 7, dadurch **gekennzeichnet**, daß die Patrone (140) ein Pulver enthält, das ein Antriebsgas freisetzt, wenn es durch ein pyrotechnisches Mittel entzündet wird.

9. Einhakvorrichtung nach Anspruch 7, dadurch **gekennzeichnet**, daß die Patrone (140) eine Gasreserve darstellt, deren Antriebsgas durch ein Ventil oder einen zugeordneten Hahn freigesetzt wird.

10. Einhakvorrichtung nach einem der Ansprüche 1 bis 9, dadurch **gekennzeichnet**, daß der schwenkbare Haken (102) der Wirkung mindestens einer Rückstellfeder (123) ausgesetzt ist, welche versucht, ihn in der Entriegelungsrichtung zu verschwenken unter Beibehaltung der Anlage an der zugeordneten Stützrolle (109), die an dem Verriegelungshebel (106) gelagert ist.
